# FASCICULE DE BREVET EUROPEEN

(11) **EP 2 839 605 B1**
(45) Date de publication et mention de la délivrance du brevet: **07.06.2023**
(21) Numéro de dépôt: 13711893.1
(22) Date de dépôt: 22.03.2013
(51) Int. Cl.: H04L 12/18, H04M 3/56

(54) **SYSTÈME ÉLECTRONIQUE DE COMMUNICATION EN CONFÉRENCE**
ELEKTRONISCHES KONFERENZKOMMUNIKATIONSSYSTEM
ELECTRONIC CONFERENCE COMMUNICATION SYSTEM

(30) Priorité: 22.03.2012 FR 1252570
(43) Date de publication de la demande: 25.02.2015
(73) Titulaire: Elno, 95100 Argenteuil (FR)
(72) Inventeur: ROBUCHON, Patrick, Jean, François, F-78690 Les Essarts Le Roi (FR); RIGAL, Jean-Marc, Aristide, François, F-95330 Domont (FR); BESSEGE, Jean-Michel, Raymond, Maurice, F-95350 Saint-Brice-sous-Forêt (FR); GERMAINE, Cyril, Charles, Marcel, F-92000 Nanterre (FR)
(74) Mandataire: Lavoix
(86) Numéro de dépôt international: PCT/EP2013/056121
(87) Numéro de publication internationale: WO 2013/139975

(56) Documents cités:
- EP-A1- 2 020 777
- WO-A1-98/04989
- US-B1- 6 600 928
- US-B1- 7 707 262

## Description

La présente invention concerne un système électronique de communication en conférence, comprenant :
- un réseau de communication, et
- une pluralité de terminaux de communication reliés entre eux via le réseau de communication.

On connait un système de communication du type précité. Ce système de communication comprend en outre un serveur de centralisation des données, connecté au réseau de communication. Le serveur est le maître du système, les terminaux de communication étant des esclaves, et le serveur coordonne l'ensemble des données échangées. L'ensemble des données échangées entre les terminaux de communication transite alors par le serveur de centralisation, celui-ci redirigeant les données en fonction du destinataire de chacun des messages de données.

EP 2 020 777 A1 décrit un système électronique de communication en conférence comprenant une pluralité de terminaux de communication reliés entre eux via un réseau de communication, les terminaux de communication étant tous identiques et adaptés pour communiquer en mode point-à-point.

Toutefois, chaque ajout d'un nouveau terminal de communication dans le système de communication nécessite qu'un port de communication soit libre sur le serveur de centralisation. S'il n'y a plus aucun port de communication disponible, il est alors nécessaire de redimensionner le serveur de centralisation, ce qui est fastidieux et engendre des surcoûts. En outre, si le serveur est défectueux, alors tous les terminaux de communication esclaves sont inopérants.

US 7,707,262 B1 décrit un procédé d'administration d'accès avec restriction de contenu dans une conférence électronique avec une architecture client-serveur.

Le but de l'invention est donc de proposer un système de communication permettant d'ajouter facilement un terminal de communication.

A cet effet, l'invention a pour objet un système de communication selon la revendication 1.

Suivant d'autres aspects avantageux de l'invention, le système de communication est selon l'une quelconque des revendications 2 à 9.

Ces caractéristiques et avantages de l'invention apparaitront à la lecture de la description qui va suivre, données unique à titre d'exemple non limitatif, et faite en référence aux dessins annexés sur lesquels :
- la figure 1 est une représentation schématique d'un système électronique de communication en conférence comprenant un réseau de communication et une pluralité de terminaux de communication reliés entre eux via le réseau de communication,
- la figure 2 est une représentation schématique d'un terminal de communication de la figure 1, et
- la figure 3 représente une courbe correspondant à une fonction de correction appliquée aux signaux vocaux par un additionneur numérique contenu dans le terminal de la figure 1.

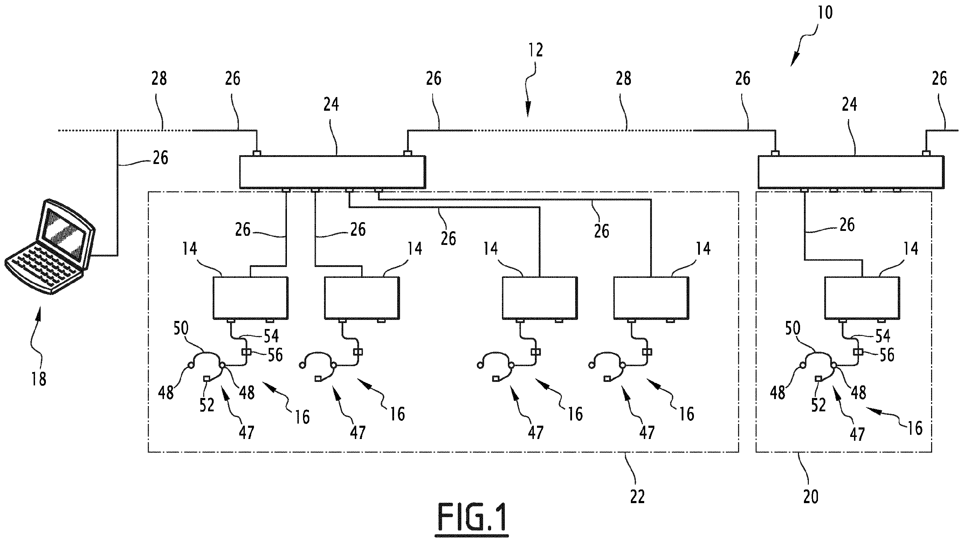

Sur la figure 1, un système électronique 10 de communication en conférence comprend un réseau de communication 12 et une pluralité de terminaux de communication 14 reliés entre eux via le réseau de communication 12.

Le système de communication 10 comprend une pluralité d'équipements électroacoustiques 16, chacun étant connecté à un terminal de communication 14 respectif.

En complément, le système de communication 10 comprend un appareil informatique 18 connecté au réseau de communication 12 et propre à mettre à jour une configuration de chaque terminal de communication 14 et/ou à piloter à distance un terminal de communication 14, afin de fonctionner en lieu et place de celui-ci.

Dans l'exemple de réalisation de la figure 1, un terminal 14 est disposé dans un véhicule blindé 20, et les autres terminaux de communication 14 sont agencés à l'intérieur d'un autre véhicule blindé 22. En variante, un ou plusieurs terminaux de communication 14 sont agencés à l'intérieur d'un abri de commandement (de l'anglais *shelter*).

Le système de communication 10 est propre à permettre une conférence en interphonie, c'est-à-dire en transmission bidirectionnelle simultanée (de l'anglais *full duplex),* entre tous les terminaux de communication 14. Le système de communication 10 est également propre à permettre une conférence en radio, c'est-à-dire en transmission unidirectionnelle (de l'anglais *simplex),* entre les terminaux de communication 14.

Le système de communication 10 est particulièrement adapté pour équiper toutes les flottes de véhicules blindés, qu'ils soient à roues ou chenillés, lors d'opérations de commandement, de reconnaissance, de soutien ou encore de transport de troupes.

Le réseau de communication 12 comporte un commutateur 24 et une pluralité de liaisons filaires 26, chaque liaison filaire 26 reliant un terminal de communication 14 respectif au commutateur 24.

Le réseau de communication 12 est, par exemple, un réseau Ethernet, c'est-à-dire conforme à la norme IEEE 802.3, et le commutateur 24 est un commutateur Ethernet (de l'anglais *switch Ethernet).* Les liaisons filaires 26 sont également des liaisons Ethernet conforme à la norme IEEE 802.3.

Dans l'exemple de réalisation de la figure 1, le réseau de communication 12 comporte deux commutateurs 24 reliés entre eux par des liaisons filaires 26, les liaisons filaires 26 étant elles mêmes connectées à un réseau Ethernet 28 représenté en traits pointillés.

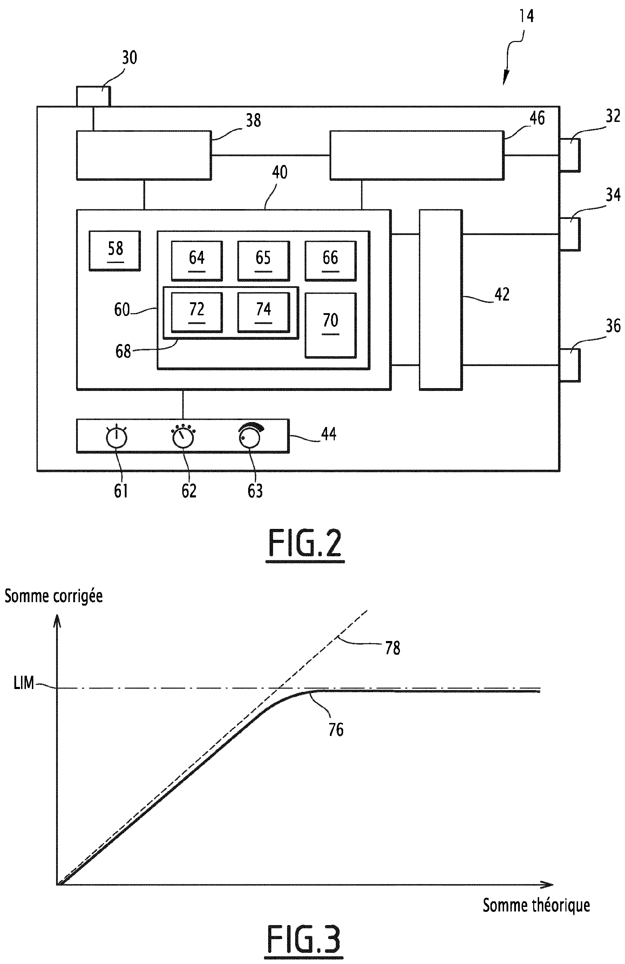

Chaque terminal de communication 14, visible sur la figure 2, comprend une borne 30 de connexion au réseau de communication, une borne 32 d'alimentation électrique du terminal, une première borne d'entrée/sortie audio 34 et une deuxième borne d'entrée/sortie audio 36.

Chaque terminal de communication 14 comprend également un émetteur-récepteur 38, une unité de traitement d'informations 40, un module de filtrage audio 42, une interface homme-machine 44 et un module 46 d'alimentation de l'émetteur-récepteur, de l'unité de traitement d'informations, du module de filtrage et de l'interface homme-machine.

Chaque terminal de communication 14 comporte une fonction d'interphonie, et est alors propre à fonctionner en mode de transmission bidirectionnelle simultanée (de l'anglais *full duplex).* En complément, chaque terminal de communication 14 comporte une fonction de radio, et est alors propre à fonctionner en mode de transmission unidirectionnelle (de l'anglais *simplex).*

Dans le mode de réalisation décrit, chaque terminal de communication 14 comporte une pluralité de fonctions de communication, à savoir des première 11, deuxième I2, troisième I3 et quatrième I4 fonctions d'interphonie, ainsi que des première R1, deuxième R2, troisième R3 et quatrième R4 fonctions de radio.

Chaque terminal de communication 14 est propre à délivrer en sortie un signal audio correspondant à une ou plusieurs trames de données reçues d'un ou plusieurs terminaux de communication 14, en l'absence d'un serveur de centralisation de données connecté au réseau de communication 12.

Tous les terminaux de communication 14 sont, par exemple, identiques, chacun étant ensuite configurable, notamment à l'aide de l'interface homme-machine 44 et de l'appareil informatique 18.

Chaque équipement électroacoustique 16 comprend un casque acoustique 47 comportant deux modules acoustiques latéraux 48, un arceau 50 de liaison des modules acoustiques latéraux, et un microphone 52 relié à l'un des deux modules acoustiques latéraux, comme représenté sur la figure 1. Chaque casque acoustique 47 comporte également un fil de casque 54 et un alternat 56 agencé sur le fil de casque. Chaque module acoustique 48 comporte un écouteur de type aérien. En variante, chaque module acoustique 48 comporte un écouteur de type ostéophonique. Chaque casque acoustique 47 est un casque antibruit comportant une protection phonique. La protection phonique est passive. En variante, la protection phonique est active, l'équipement électroacoustique 16 comportant en outre un réducteur actif de bruit.

En complément, l'équipement électroacoustique 16 comprend un équipement de tête, tel qu'un casque de protection, non représenté. En complément, l'équipement électroacoustique 16 comprend un ou plusieurs haut-parleurs, non représentés.

L'appareil informatique 18 est relié au réseau de communication 12. Dans l'exemple de réalisation de la figure 1, l'appareil informatique 18 est relié à un commutateur 24, par l'intermédiaire de liaison filaire 26 et d'un réseau Ethernet 28. L'appareil informatique 18 comporte une unité de traitement d'informations, un écran d'affichage et des moyens d'émission et de réception de données à destination et depuis le réseau de communication, non représentés.

L'appareil informatique 18 est propre à afficher une page Web de manière connue en soi. L'appareil informatique 18 comporte également des moyens de saisies, afin de modifier le contenu de la page Web pour configurer certaines fonctions de communication du terminal 14, comme cela sera décrit plus en détail par la suite. L'appareil informatique 18 est donc propre à mettre à jour une configuration de chaque terminal de communication 14.

En complément ou en variante, l'appareil informatique 18 est propre à piloter à distance un terminal de communication 14 via la page Web affichée, la page Web affichée permettant de piloter l'ensemble des fonctions de l'interface homme-machine 44 d'un terminal de communication donné.

La borne de connexion 30 comporte un connecteur Ethernet, tel qu'un connecteur RJ 45. La borne de connexion 30, la borne d'alimentation 32 et les première et deuxième bornes d'entrée/sortie audio 34, 36 comportent chacune un connecteur, de préférence un connecteur militaire conforme aux normes militaires française et internationales, telles que les normes MIL STD 810F et MIL STD-461E.

Les bornes d'entrée/sortie audio 34, 36 sont, par exemple, destinées à être reliées à un casque acoustique 47, de préférence un casque antibruit, ou encore à un haut-parleur amplifié.

L'émetteur-récepteur 38 est propre à envoyer des données au réseau de communication 12 et à recevoir des données dudit réseau 12. L'émetteur-récepteur 38 est, par exemple, conforme à la norme IEEE 802.3, et est alors appelé module de communication Ethernet.

L'unité de traitement d'information 40 comporte un processeur de données 58 et une mémoire 60 reliée au processeur 58.

Le module de filtrage 42 est propre à filtrer les signaux audio destinés à être délivrés en sortie du terminal de communication 14 et/ou les signaux audio reçus en entrée du terminal de communication 14.

L'interface homme-machine 44 comporte un premier sélecteur 61, un deuxième sélecteur 62 et un bouton 63 de réglage du volume. En complément, l'interface homme-machine 44 comporte un afficheur, non représenté, permettant de donner une information visuelle de l'état du terminal de communication 14. En complément, l'interface homme-machine 44 comporte un interrupteur, non représenté, de mise en marche/d'arrêt du terminal de communication 14.

Le module d'alimentation 46 est propre à alimenter en courant continu l'émetteur-récepteur 38, l'unité de traitement d'informations 40, le module de filtrage 42 et l'interface homme-machine 44, par exemple à partir d'une alimentation en courant continu. Le courant continu d'entrée présente, par exemple, une tension de valeur comprise entre 18 V et 33 V.

La mémoire 60 est apte à stocker un logiciel 64 d'émission de trame(s) de données à destination des autres terminaux de communication 14, un logiciel 65 de réception de trame(s) de données émise(s) par les autres terminaux de communication 14, un logiciel 66 de sélection d'une ou plusieurs trames parmi l'ensemble des trames reçues dans un intervalle de temps donné.

La mémoire 60 est également apte à stocker un logiciel 68 de génération, à partir de la ou des trames sélectionnées, d'un signal audio propre à être délivré en sortie du terminal de communication.

En variante, les moyens d'émission 64, les moyens de réception 65, les moyens de sélection 66 et les moyens de génération 68 sont réalisés sous forme de composants logiques programmables, ou encore sous forme de circuits intégrés dédiés.

La mémoire 60 est également apte à stocker un fichier de configuration 70 contenant une liste de terminaux autorisés, le logiciel de sélection 68 étant propre à sélectionner les trames émises par lesdits terminaux autorisés.

En complément, la mémoire 60 est également apte à stocker un logiciel de détection d'activité vocale, afin d'émettre une trame de données seulement lorsqu'une voix a été détectée.

Le premier sélecteur 61 est, par exemple, un sélecteur à trois positions. Le premier sélecteur 61 permet de sélectionner un mode parmi les trois modes suivants : mode test avec une fonction de synthèse vocale, mode écouteurs seuls, et mode combiné avec écouteurs et microphone.

Le deuxième sélecteur 62 est un sélecteur à plusieurs positions, tel qu'un sélecteur à cinq positions. Chaque position du deuxième sélecteur 62 correspond à la sélection d'une fonction de communication parmi la pluralité de fonctions de communication I1, I2, I3, I4, R1, R2, R3, R4. Autrement dit, le deuxième sélecteur 62 est propre à sélectionner une fonction de communication parmi la pluralité de fonctions de communication I1 à I4, R1 à R4.

L'association de chaque position du deuxième sélecteur 62 avec une fonction de communication parmi la pluralité de fonctions de communication I1 à I4, R1 à R4 est configurable. Cette association de chaque position du deuxième sélecteur 62 avec une fonction de communication est, par exemple, configurable via le réseau de communication 12, notamment via une page Web modifiable par l'appareil informatique 18.

Cette association est configurable de manière indépendante d'un terminal de communication 14 à l'autre. En d'autres termes, l'association de chaque position du deuxième sélecteur 62 avec une fonction de communication est spécifique à chaque terminal de communication 14.

Le logiciel d'émission 64 est propre à permettre une émission en diffusion générale à l'ensemble des terminaux de communication 14 (de l'anglais *broadcast).*

Le logiciel de réception 65 est propre à recevoir l'ensemble des trames de données émises par les autres terminaux de communication 14.

Le logiciel de sélection 66 est propre à sélectionner une ou plusieurs trames suivant un critère prédéterminé. Le critère est modifiable, et est par exemple contenu dans le fichier de configuration 70. L'ensemble des trames reçues des autres terminaux de communication est analysé dans l'intervalle de temps donné.

L'intervalle de temps donné est fonction de la période d'échantillonnage du signal audio de sortie, par exemple égal à ladite période d'échantillonnage. Dans le mode de réalisation décrit, la période d'échantillonnage est égale à 20ms.

Le logiciel de sélection 66 est, par exemple, propre à sélectionner les trames reçues des terminaux autorisés selon le fichier de configuration 70.

Chaque trame de données reçue ou émise comporte un signal vocal, et le logiciel de génération 68 comporte un additionneur 72 du ou des signaux vocaux correspondant aux trames sélectionnées et un convertisseur 74 des signaux vocaux additionnés en un signal audio délivré sur les première et deuxième bornes audio 34, 36.

Le fichier de configuration 70 permet de définir pour chaque trame reçue si celle-ci doit être prise en compte ou non, afin d'être additionnée aux autres trames déjà prises en compte dans l'intervalle de temps donné.

Dans le mode de réalisation décrit, le fichier de configuration 70 comporte, suivant la fonction de communication I1 à I4, R1 à R4 du terminal émetteur 14 et la fonction de communication I1 à I4, R1 à R4 du terminal récepteur 14, une indication E selon laquelle la trame reçue doit être sélectionnée ou bien aucune indication lorsque la trame ne doit pas être sélectionnée. Les fonctions I1 à I4 correspondent à un groupe de communication en mode interphonie, et les fonctions R1 à R4 correspondent à un groupe de communication en mode radio.

Le fichier de configuration 70 comporte, par exemple, un tableau tel que le tableau 1 représenté ci-après, où les lignes correspondent aux différentes fonctions de communication I1 à I4, R1 à R4 possibles du terminal récepteur 14 et les colonnes correspondent aux différentes fonctions de communication I1 à I4, R1 à R4 possibles du terminal émetteur 14.

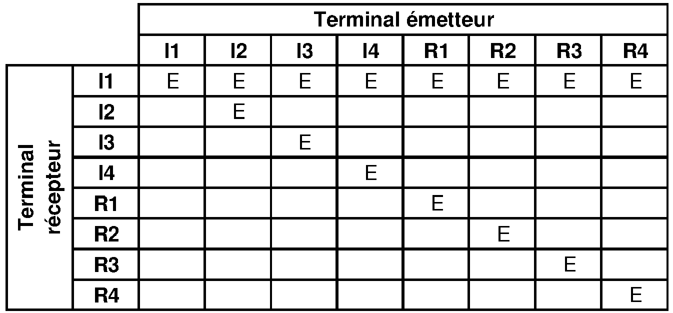

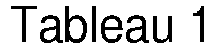

Dans l'exemple de réalisation du tableau 1, le terminal de communication 14 est propre sélectionner toutes les trames reçues lorsque la fonction de communication choisie à l'aide du deuxième sélecteur 62 est la première fonction d'interphonie I1, et est propre à sélectionner seulement les trames reçues des autres terminaux 14 pour lesquels la même fonction de communication I2 à I4, R1 à R4 a été sélectionnée lorsque la fonction de communication choisie à l'aide du deuxième sélecteur 62 est une fonction de communication I2 à I4, R1 à R4 distincte de la première fonction d'interphonie I1.

Le fichier de configuration 70 est modifiable par l'intermédiaire de l'appareil informatique 18. Le fichier de configuration 70 est par exemple accessible à l'aide d'une page Web. Le fichier de configuration 70 est spécifique à chaque terminal de communication 14.

L'additionneur 72 est propre à appliquer une fonction de correction aux signaux vocaux, afin que la somme du ou des signaux vocaux issue de l'additionneur 72 soit toujours inférieure à une valeur limite prédéterminée LIM. L'additionneur 72 est de préférence un additionneur numérique. Sur la figure 3, la fonction de correction correspond à la courbe 76, et l'addition sans fonction de correction est représentée par la droite 78 en traits pointillés.

Le fonctionnement du système de communication selon l'invention va être à présent décrit.

Lorsque l'utilisateur souhaite établir une communication avec des utilisateurs d'autres terminaux, il commence par positionner le premier sélecteur 61 en mode combiné avec écouteurs et microphone s'il souhaite parler, ou bien mode écouteurs seuls s'il souhaite seulement écouter les conversations des autres utilisateurs.

Il positionne également le deuxième sélecteur 62 dans la position correspond à la fonction de communication qu'il souhaite utiliser parmi les fonctions d'interphonie I1 à I4 et de radio R1 à R4 préalablement associées au deuxième sélecteur 62.

Lorsqu'une fonction d'interphonie I1 à I4 est sélectionnée, c'est-à-dire en mode de transmission bidirectionnelle simultanée, l'utilisateur est susceptible de parler en même temps que les autres utilisateurs sans avoir à actionner l'alternant 56. Tous les utilisateurs des terminaux 14 écoutent l'ensemble des messages de manière simultanée.

Lorsqu'une fonction radio R1 à R4 est sélectionnée, c'est-à-dire en mode de transmission unidirectionnelle, l'utilisateur appuie préalablement sur l'alternat 56 pour s'adresser à la radio sélectionnée. Tous les utilisateurs des terminaux 14 qui sont sur la même fonction radio sélectionnée écoutent l'ensemble des messages de manière simultanée.

De par le logiciel de détection d'activité vocale, une trame de données est alors envoyée aux autres terminaux 14 seulement si la voix de l'utilisateur a été détectée. Chaque trame de données est envoyée en mode de diffusion générale à l'ensemble des terminaux de communication 14 par l'intermédiaire du logiciel d'émission 64 et de l'émetteur-récepteur 38.

Chaque trame de données émise par un terminal de communication 14 à destination des autres terminaux de communication présente une durée d'environ 20 ms. Chaque trame de données comporte des données de configuration, un numéro de trame pour la synchronisation de la trame, et le signal vocal. Chaque trame de données est, par exemple, envoyée sur la couche de transport conforme au protocole UDP (de l'anglais *User Datagram Protocol*)*.*

Les données de configuration contiennent notamment la fonction de communication positionnée à l'aide du deuxième sélecteur 62 pour le terminal émetteur, et une éventuelle indication de priorité P. Le signal audio est encodé à l'aide d'un codec connu, tel que le codec G711.

Une trame de veille est envoyée régulièrement même si aucune voix n'est détectée par le logiciel de détection d'activité vocale et quelle que soit la position du premier sélecteur 61 parmi les modes test, écouteurs seuls et combiné.

Chaque trame de données émise par un terminal de communication 14 est alors reçue par tous les autres terminaux de communication 14, et analysée à l'aide du logiciel de sélection 66 qui détermine pour chaque trame reçue si celle-ci doit être additionnée ou non à l'aide de l'additionneur 72 aux autres trames précédemment sélectionnées dans le même intervalle de temps donné.

Cette sélection est effectuée en fonction du fichier de configuration 70, contenant par exemple l'indication E selon laquelle la trame reçue doit être sélectionnée ou bien aucune indication lorsque la trame ne doit pas être sélectionnée, pour chaque couple de fonctions de communication du terminal émetteur et du terminal récepteur.

Toutes les trames sélectionnées à l'aide du logiciel de sélection 66 au cours de l'intervalle de temps donné, correspondant à la période d'échantillonnage du signal audio délivré en sortie du terminal de communication 14, sont additionnées à l'aide de l'additionneur 72.

L'additionneur 72 applique alors une fonction de correction 76 aux signaux vocaux destinés à être additionnés afin que la somme des signaux vocaux issus de l'additionneur soit toujours inférieure à la valeur limite prédéterminée LIM. Autrement dit, l'additionneur 72 est un additionneur numérique non linéaire. La fonction de correction 76 permet de garantir que le signal audio délivré en sortie du terminal de communication 14 sera toujours audible quel que soit le nombre d'utilisateurs du système de communication en conférence 10.

Lorsque l'indication de priorité P est contenue dans les données de configuration de l'une des trames reçue au cours de l'intervalle de temps donné, alors seule cette trame est prise en compte par le logiciel de sélection 66, les autres trames reçues dans le même intervalle de temps donné étant supprimées.

Lorsque le logiciel de sélection 66 détermine si une trame reçue doit être écoutée ou non, c'est-à-dire additionnée aux autres trames afin de former le signal audio délivré en sortie, la fonction de communication du terminal émetteur est déterminée à l'aide des données de configuration contenues dans la trame reçue, et la fonction de communication du terminal récepteur est déterminée à l'aide d'une recopie du deuxième sélecteur 62, le fichier de configuration 70 étant stocké dans la mémoire 60.

Autrement dit, le logiciel de sélection 66 est propre à déterminer pour chaque trame reçue au cours de l'intervalle de temps donné, si celle-ci doit être prise en compte ou non afin de l'additionner aux autres trames reçues et déjà prises en compte dans le même intervalle de temps donné.

Chaque terminal de communication 14 détermine ainsi pour chaque intervalle de temps donné, c'est-à-dire pour chaque période d'échantillonnage, les trames à prendre en compte parmi celles reçues à l'aide du logiciel de sélection 66, et les additionne à l'aide de l'additionneur 72 afin de délivrer en sortie le signal audio, restitué par exemple via les modules acoustiques 48.

Le système électronique de communication en conférence 10 selon l'invention est ainsi particulièrement modulable puisqu'un nouveau terminal de communication 14 est insérable dans le système de communication sans avoir à reconfigurer les autres terminaux de communication 14.

Chaque commutateur 24 du réseau de communication 12 est en outre connectable à n'importe quel réseau existant conforme à la même norme de communication que le réseau de communication 12. Dans l'exemple de réalisation de la figure 1, chaque commutateur Ethernet 24 est connectable à un réseau Ethernet existant.

En outre, le système de communication 10 reste fonctionnel même si la gestion du réseau externe auquel il est connecté devient inopérante. Le système de communication 10 est de manière générale fonctionnel en l'absence de serveur de centralisation connecté au réseau de communication.

L'homme du métier comprendra que, bien que le système de communication 10 soit fonctionnel en l'absence de serveur de centralisation, le système de communication 10 est également opérationnel lorsqu'il est connecté à un réseau externe comportant un serveur de centralisation.

Bien que seulement deux commutateurs 24 soient représentés sur la figure 1, l'homme du métier comprendra également que d'autres commutateurs 24 sont susceptibles d'être reliés aux deux commutateurs 24, par exemple à l'aide de la liaison filaire 26 représentée à l'extrémité droite de la figure 1. Le réseau de communication 12 permet ainsi un chaînage entre une pluralité de véhicules.

Le système de communication 10 est opérationnel avec seulement deux terminaux de communication 14 reliés via le réseau de communication 12, le réseau de communication 12 comportant par exemple un commutateur 24 et deux liaisons filaires reliant chacune le commutateur 24 ou deux terminaux de communication 14, afin d'être fonctionnel.

L'association de chaque position du deuxième sélecteur 62 avec une fonction de communication parmi la pluralité de fonctions de communication I1 à I4, R1 à R4 est configurable, indépendamment pour chaque terminal de communication 14, à l'aide d'une page Web et de l'appareil informatique 18, ce qui offre également une grande souplesse d'utilisation.

Ainsi, le système de communication 10 selon l'invention permet de répartir la gestion des communications entre tous les terminaux de communication 14 à la différence du système de communication de l'état de la technique, où la gestion des communications est effectuée exclusivement par le serveur de centralisation.

En outre, chaque terminal de communication 14 étant indépendant du ou des autres terminaux de communication 14, un défaut sur un terminal de communication 14 donné n'engendre pas de perturbation sur le ou les autres terminaux de communication 14.

On conçoit ainsi que le système de communication 10 selon l'invention permet d'ajouter facilement un terminal de communication 14, et autant que nécessaire.

## Revendications

1. Système électronique (10) de communication en conférence, comprenant :
- un réseau de communication (12),
- une pluralité de terminaux de communication (14) reliés entre eux via le réseau de communication (12),
**caractérisé en ce que** chaque terminal de communication (14) comporte :
- des moyens (62) d'émission de trame(s) de données à destination du ou des autres terminaux (14),
- des moyens (64) de réception de trame(s) de données émise(s) par le ou les autres terminaux (14),
- des moyens (66) de sélection d'une ou plusieurs trames parmi l'ensemble des trames reçues dans un intervalle de temps donné,
- des moyens (68) de génération, à partir de la ou des trames sélectionnées, d'un signal audio propre à être délivré en sortie du terminal (14), et
**en ce que** chaque terminal de communication (14) est propre à délivrer en sortie le signal audio, en l'absence d'un serveur de centralisation des données connecté au réseau de communication (12).

2. Système de communication (10) selon la revendication 1, dans lequel chaque terminal de communication (14) comporte un fichier de configuration (70) contenant une liste de terminaux autorisés, et les moyens de sélection (66) sont propres à sélectionner les trames émises par lesdits terminaux autorisés.

3. Système de communication (10) selon la revendication 2, dans lequel le fichier de configuration (70) est modifiable par l'intermédiaire d'un appareil informatique (18), l'appareil informatique (18) étant connecté au réseau de communication (12).

4. Système de communication (10) selon l'une quelconque des revendications précédentes, dans lequel chaque trame comporte un signal vocal, et dans lequel les moyens de génération (68) comportent un additionneur (72) du ou des signaux vocaux correspondants aux trames sélectionnées.

5. Système de communication (10) selon la revendication 4, dans lequel l'additionneur (72) est propre à appliquer une fonction de correction (76) aux signaux vocaux, afin que la somme du ou des signaux vocaux issue de l'additionneur soit toujours inférieure à une valeur limite prédéterminée (LIM).

6. Système de communication (10) selon l'une quelconque des revendications précédentes, dans lequel le réseau de communication (12) comporte un commutateur (24) et une pluralité de liaisons filaires (26), chaque liaison filaire (26) reliant un terminal de communication (14) respectif au commutateur (24).

7. Système de communication (10) selon la revendication 6, dans lequel le commutateur (24) est un commutateur Ethernet, et les liaisons filaires (26) sont des liaisons Ethernet.

8. Système de communication (10) selon l'une quelconque des revendications précédentes, dans lequel les moyens d'émission (62) sont des moyens d'émission en diffusion générale à l'ensemble des terminaux de communication.

9. Système de communication (10) selon l'une quelconque des revendications précédentes, dans lequel chaque terminal de communication (14) est propre à fonctionner en mode de transmission bidirectionnelle simultanée ou en mode de transmission unidirectionnelle.

## Patentansprüche

1. Elektronisches System (10) zur Kommunikation in Konferenz, umfassend:
- ein Kommunikationsnetzwerk (12),
- eine Vielzahl von Kommunikationsendgeräten (14), die über das Kommunikationsnetzwerk (12) miteinander verbunden sind,
**dadurch gekennzeichnet, dass** jedes Kommunikationsendgerät (14) folgendes umfasst:
- Einrichtungen (62) zum Senden von Datenframe(s) mit Ziel des oder anderer Endgeräte (14),
- Einrichtungen (64) zum Empfangen von Datenframe(s), die von dem oder den anderen Endgeräten (14) ausgegeben werden,
- Einrichtungen (66) zur Auswahl eines oder mehrerer Frames aus der Gesamtheit der Frames, die in einem bestimmten Zeitintervall empfangen werden,
- Einrichtungen (68), um aus dem oder den ausgewählten Frames ein Audiosignal zu erzeugen, das geeignet ist, um an dem Ausgang des Endgeräts (14) übergeben zu werden, und
dass jedes Kommunikationsendgerät (14) geeignet ist, um das Audiosignal zu übergeben, wenn kein mit dem Kommunikationsnetzwerk (12) verbundener Server zur Zentralisierung der Daten vorhanden ist.

2. Kommunikationssystem (10) nach Anspruch 1, wobei dem jedes Kommunikationsendgerät (14) eine Konfigurationsdatei (70) umfasst, die eine Liste von autorisierten Endgeräten enthält, und die Auswahleinrichtungen (66) geeignet sind, die von den autorisierten Endgeräten gesendeten Frames auszuwählen.

3. Kommunikationssystem (10) nach Anspruch 2, wobei die Konfigurationsdatei (70) über ein Computergerät (18) veränderbar ist, wobei das Computergerät (18) mit dem Kommunikationsnetzwerk (12) verbunden ist.

4. Kommunikationssystem (10) nach einem der vorherigen Ansprüche, wobei jedes Frame ein Sprachsignal umfasst und wobei die Erzeugungseinrichtungen (68) einen Addierer (72) für das oder die Sprachsignale umfassen, die den ausgewählten Frames entsprechen.

5. Kommunikationssystem (10) nach Anspruch 4, wobei der Addierer (72) geeignet ist, um eine Korrekturfunktion (76) auf die Sprachsignale anzuwenden, sodass die Summe des oder der Sprachsignale aus dem Addierer immer kleiner ist als ein vorbestimmter Grenzwert (LIM).

6. Kommunikationssystem (10) nach einem der vorherigen Ansprüche, wobei das Kommunikationsnetzwerk (12) einen Umschalter (24) und eine Vielzahl von Drahtverbindungen (26) umfasst, wobei jede Drahtverbindung (26) ein jeweiliges Kommunikationsendgerät (14) mit dem Umschalter (24) verbindet.

7. Kommunikationssystem (10) nach Anspruch 6, wobei der Umschalter (24) ein Ethernet-Umschalter ist und die Drahtverbindungen (26) Ethernet-Verbindungen sind.

8. Kommunikationssystem (10) nach einem der vorherigen Ansprüche, wobei die Sendeeinrichtungen (62) Einrichtungen zur allgemeinen Aussendung an alle Kommunikationsendgeräte sind.

9. Kommunikationssystem (10) nach einem der vorherigen Ansprüche, wobei jedes Kommunikationsendgerät (14) geeignet ist, um in einem simultanen bidirektionalen Übertragungsmodus oder in einem unidirektionalen Übertragungsmodus betrieben zu werden.

## Claims

1. An electronic conference communication system (10), comprising:
- a communication network (12),
- a plurality of communication terminals (14) linked together via the communication network (12),
**characterised in that** each communication terminal (14) comprises:
- means (62) for transmitting data frames to the other terminal(s) (14),
- means (64) for receiving data frame(s) transmitted by the other terminal(s) (14),
- means (66) for selecting one or more frames from the set of frames received in a given time interval,
- means (68) for generating, from the selected frame or frames, an audio signal suitable for output from the terminal (14), and
**in that** each communication terminal (14) is suitable for outputting the audio signal in the absence of a central data server connected to the communication network (12).

2. A communication system (10) according to claim 1, wherein each communication terminal (14) comprises a configuration file (70) containing a list of authorised terminals, and the selection means (66) are adapted to select the frames transmitted by said authorised terminals.

3. The communication system (10) according to claim 2, wherein the configuration file (70) is modifiable via a computing device (18), the computing device (18) being connected to the communication network (12).

4. A communication system (10) according to any of the preceding claims, wherein each frame comprises a voice signal, and wherein the generating means (68) comprises an adder (72) of the voice signal(s) corresponding to the selected frames.

5. A communication system (10) according to claim 4, wherein the adder (72) is adapted to apply a correction function (76) to the voice signals, so that the sum of the voice signal(s) from the adder is always less than a predetermined limit value (LIM).

6. A communication system (10) according to any of the preceding claims, wherein the communication network (12) comprises a switch (24) and a plurality of wire links (26), each wire link (26) connecting a respective communication terminal (14) to the switch (24).

7. The communication system (10) according to claim 6, wherein the switch (24) is an Ethernet switch, and the wire links (26) are Ethernet links.

8. A communication system (10) according to any of the preceding claims, wherein the transmission means (62) are means for general broadcast transmission to all communication terminals.

9. A communication system (10) according to any of the preceding claims, wherein each communication terminal (14) is adapted to operate in a simultaneous two-way transmission mode or in a one-way transmission mode.
